# EUROPEAN PATENT APPLICATION

(11) **EP 1 353 201 A2**
(43) Date of publication of application: **15.10.2003**
(21) Application number: 03001321.3
(22) Date of filing: 23.01.2003
(51) Int. Cl.: G02B 6/124, G02B 6/293

(54) **Dual wavelength division multiplexing/demultiplexing device using one planar lightguide circuit**

(30) Priority: 30.03.2002 KR 2002017668
(71) Applicant: SAMSUNG ELECTRONICS CO., LTD., Suwon-City, Kyungki-do (KR)
(72) Inventor: Kwon, Oh-Dal, Suwon-city, Kyungki-do (KR)
(74) Representative: Lang, Johannes, Dipl.-Ing.

(57) **Abstract**

A dual wavelength division multiplexing/demultiplexing device for multiplexing/demultiplexing optical signals is provided. The device comprising (a) a planar lightguide circuit comprising a first wavelength division multiplexing/demultiplexing device (20) and a second wavelength division multiplexing/demultiplexing device (30), the first wavelength division multiplexing/demultiplexing device having input and output ports (210P,218P) of several first input and output waveguides (210,218) at one side (P1) and a first arrayed waveguide grating (AWG1) coupled to the several first input and output waveguides (210,218), and the second wavelength division multiplexing/demultiplexing device (30) positioned in symmetric with the first wavelength division multiplexing/demultiplexing device about the center and comprising the input and output ports (310P,318P) of several second input and output waveguides (310,318) at the opposite side (P2) and a second arrayed waveguide grating (AWG2) coupled to the several second input and output waveguides (310,318); (b) a first optical fiber array block (40) having a number of ports corresponding to the input and output ports of the several first input and output waveguides and connected to first ribbon optical fibers (412); and, (c) a second optical fiber array block (50) having a number of ports corresponding to the input and output ports of the several second input and output waveguides and connected to second ribbon optical fibers (512).

## Description

### BACKGROUND OF THE INVENTION

### 1. Field of the Invention

The present invention relates to a planar lightguide circuit (PLC) used in optical transmission systems for wavelength division multiplexing/demultiplexing (MUX/DEMUX) optical signals, and more particularly to a dual wavelength division multiplexing/demultiplexing device using one planar lightguide circuit.

### 2. Description of the Related Art

As one skilled in this art can appreciate, wavelength division multiplexing (WDM) communication systems are typically used to transmit large amounts of information by simultaneously transmitting optical signals with the number of N wavelengths via a single optical fiber. Arrayed waveguide gratings (AWG) are then used to separate optical signals of different wavelengths at the receiving end.

Recently, there have been many studies about the integration of a planar lightguide circuit for fabricating optical waveguides on a planar substrate using a planar lightguide technology. In particular, the studies have been focused on the application of optical signal processing using the planar lightguide circuit, such as bifurcation, modulation, switching and signal multiplexing of optical signals. The fabrication process for this type of a planar lightguide circuit typically includes the following stages: design, fabrication, arrangement, and packaging of optical waveguides, for example.

An optical waveguide serves as an optical transmission line for confining incoming light and in turn transmitting the light while reducing optical loss. It consists of a higher refractive index core and a lower refractive index cladding surrounding the core. Meanwhile, a planar lightguide circuit, which is fabricated after depositing several layers of silica or polymer thin film on a substrate, such as silicon or quartz, functions to separate light, switch the path of light, or modulate the intensity of light using difference in the refractive index between the core and the cladding.

The wavelength division multiplexing/demultiplexing device using the planar lightguide circuit as mentioned-above has been disclosed in Korean Patent Application No. 2001-44380, filed by the present applicant and in the U.S. Patent application No. 10/093,000, filed on March 7, 2002. However, the wavelength division multiplexing/demultiplexing devices used in current optical transmission systems is mainly aimed in achieving lower costs and requires two optical circuits.

Accordingly, there is a need to develop a wavelength division multiplexing/demultiplexing device using an inventive single optical circuit, instead of dual optical circuits, to reduce the manufacturing cost and simplify the design.

### SUMMARY OF THE INVENTION

The present invention overcomes the above-described problems, and provides additional advantages, by providing a dual wavelength division multiplexing/demultiplexing device, in which two multiplexing/demultiplexing arrayed waveguide gratings in symmetry with each other are integrated on a single planar lightguide circuit. Further, optical fiber blocks are installed at the input and output modules, thus obtaining dual MUX/DEMUX effects using one planar lightguide circuit.

In accordance with the present invention, a device for wavelength division multiplexing/demultiplexing optical signals using several input and output waveguides and arrayed waveguide gratings that are coupled with the several input and output waveguides includes: (a) a planar lightguide circuit comprising a first wavelength division multiplexing/demultiplexing device and a second wavelength division multiplexing/demultiplexing device, the first wavelength division multiplexing/demultiplexing device comprising the input and output ports of several first input and output waveguides on one side and a first arrayed waveguide grating coupled with the several first input and output waveguides, and the second wavelength division multiplexing/demultiplexing device being positioned to be symmetric with the first wavelength division multiplexing/demultiplexing device about the center and comprising the input and output ports of several second input and output waveguides on the opposite side, separated from the one side, and a second arrayed waveguide grating coupled with the several second input and output waveguides; (b) a first optical fiber array block comprising ports corresponding to the input and output ports of the several first input and output waveguides and connecting with first ribbon optical fibers; and, (c) a second optical fiber array block comprising ports corresponding to the input and output ports of the several second input and output waveguides and connecting with second ribbon optical fibers.

### BRIEF DESCRIPTION OF THE DRAWINGS

The above and other features and other advantages of the present invention will be more clearly understood from the following detailed description taken in conjunction with the accompanying drawings, in which:
Fig. 1 is an expanded perspective view showing a dual wavelength division multiplexing/demultiplexing device according to one preferred embodiment of the present invention;
Fig. 2 is a plan view of the dual wavelength division multiplexing/demultiplexing device of Fig. 1;
Fig. 3 is an expanded plan view showing a first optical fiber array block of Fig. 1; and,
Fig. 4 is an expanded plan view showing a second optical fiber array block of Fig. 1.

### DETAILED DESCRIPTION OF THE PREFERRED EMBODIMENTS

Now, preferred embodiments of the present invention will be described in detail with reference to the annexed drawings. For the purpose of clarity and simplicity, a detailed description of known functions and configurations incorporated herein will be omitted when it may make the subject matter of the present invention rather unclear.

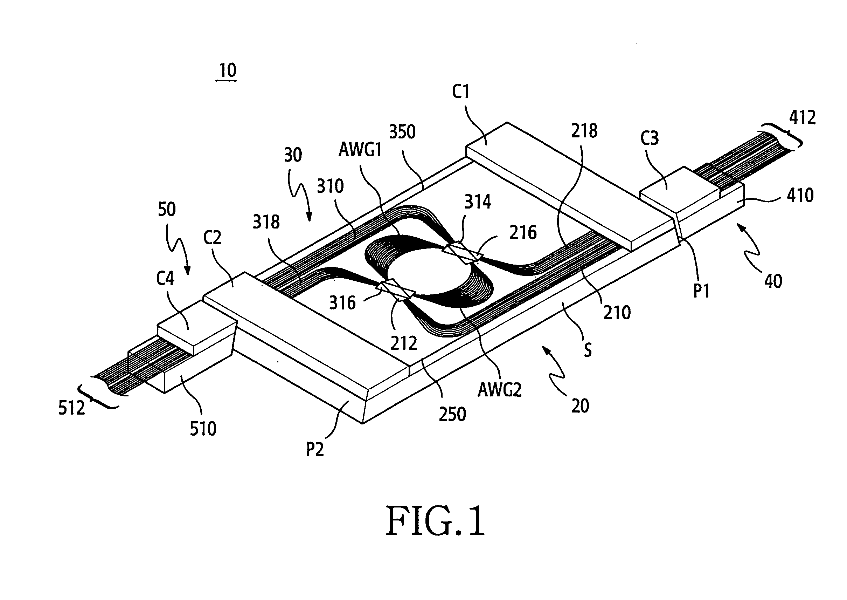

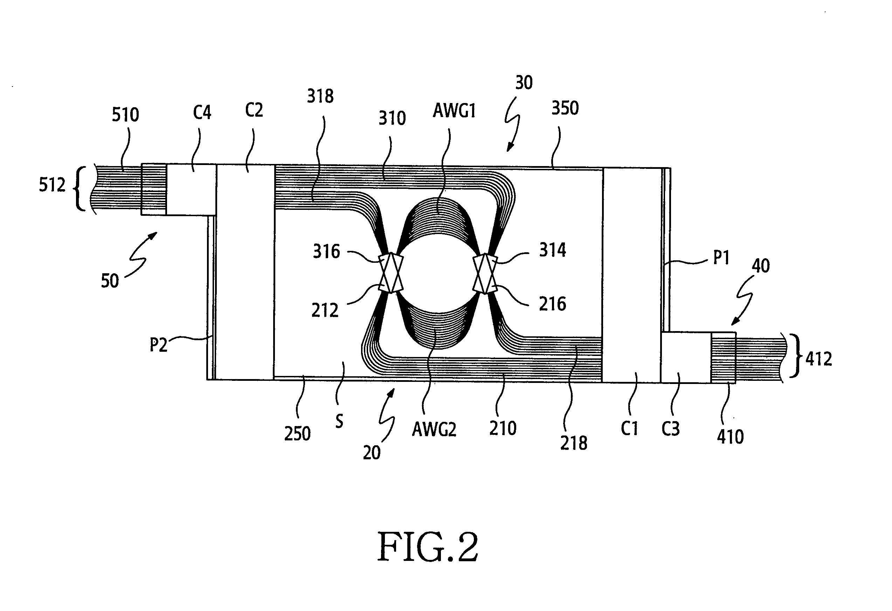

Referring to Figs. 1 and 2, the dual wavelength division multiplexing/demultiplexing device 10 according to the present invention comprises one planar lightguide circuit S (hereinafter, referred to "optical circuit") having a first and a second wavelength division multiplexing/demultiplexing device 20, 30, and a first and a second optical fiber array block 40, 50 coupled to side P1 and side P2 of the optical circuit S, respectively. The first and the second optical fiber array block 40, 50 are connected with first and second ribbon optical fibers 412, 512, respectively. As such, the first and the second ribbon optical fibers 412, 512 are in turn connected to the first and the second wavelength division multiplexing/demultiplexing device 20, 30 through the first and the second optical fiber array block 40, 50.

Note that one side P1 of the optical circuit S and the other side P2 of the optical circuit S are polished at a predetermined angle. The first optical fiber array block 40 is coupled with the first wavelength division multiplexing/demultiplexing device 20 at the one side P1 of the optical circuit S, and the second optical fiber array block 50 is coupled with the second wavelength division multiplexing/demultiplexing device 30 at the other side P2 of the optical circuit S.

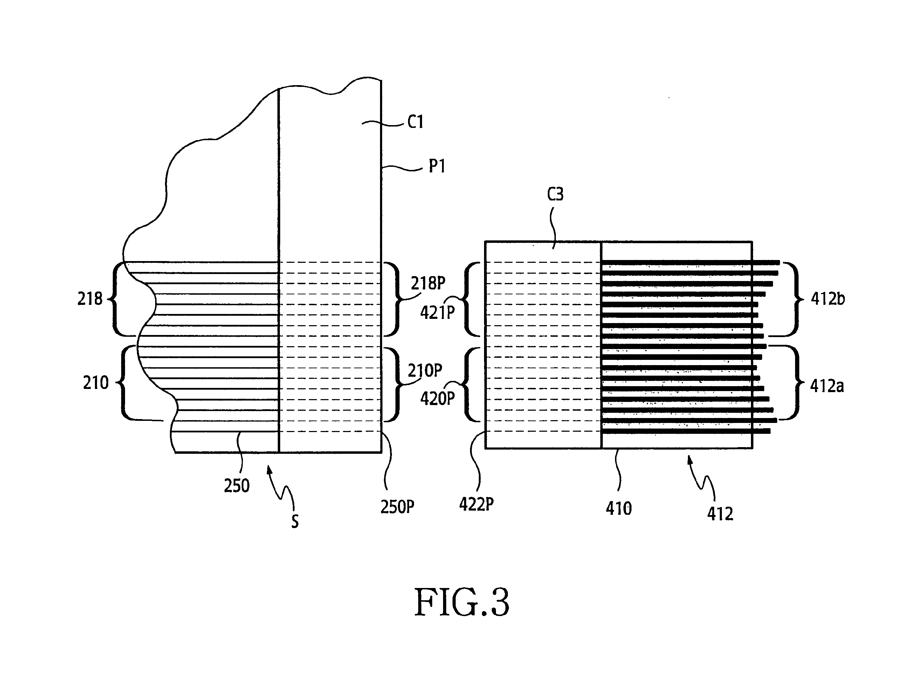

Referring to Fig. 3, the first wavelength division multiplexing/demultiplexing device 20 comprises the input and output ports 210P, 218P of serveral first input and output waveguides 210, 218 at side P1, and a first arrayed waveguide grating AWG1 coupled with the several first input and output waveguides 210, 218. The second wavelength division multiplexing/demultiplexing device 30 comprises the input and output ports 310P, 318P of several second input and output waveguides 310, 318 at the side P2 that is opposite to the side P1, and a second arrayed waveguide grating AWG2 coupled with the several second input and output waveguides 310, 318.

Note that the optical circuit S comprises the first and the second wavelength division multiplexing/demultiplexing device 20, 30 of the same structure. The first and the second wavelength division multiplexing/demultiplexing device 20, 30 are symmetrical with each other up and down about center. Alternatively, each wavelength division multiplexing/demultiplexing device may be symmetrical left and right about center.

Now, a detailed description of the present invention will be explained in reference to Figs. 2 and 3.

As shown in Fig. 2, the first wavelength division multiplexing/demultiplexing device 20 comprises a first arranged waveguide grating AWG1, input and output waveguides 210, 218 each of which is connected with the respective ends of the first arranged waveguide grating AWG1, and a first and a second plastic coupler 212, 216 that are provided between the first arrayed waveguide grating AWG1 and the input waveguide 210 and between the first arrayed waveguide grating AWG1 and the output waveguide 218, respectively, to couple the first arrayed waveguide grating with the input and output waveguides. The first wavelength division multiplexing/demultiplexing device 20 further comprises a first array waveguide 250 in proximity to the first input waveguides 210. The first input waveguides 210 form a first waveguide array, in which several waveguides are provided at same intervals, and the first output waveguides 218 form a first output waveguide array. Alternatively, it is possible for the first input waveguide array 210 to consist of just one waveguide. As seen from the figures, the first input waveguides 210, the first output waveguides 218, and the first array waveguide 250 are oriented in the same direction.

As shown in Fig. 3, the port 250P of the first array waveguide 250 is positioned at the side P1. The first array waveguide 250 is a straight waveguide and installed in proximity to the first input waveguide array 210. The input and output ports 210P, 218P of the first wavelength division multiplexing/demultiplexing device 20 and the port 250P of the first array waveguide are positioned at side P1. That is, they are positioned in a line on the same side.

Referring back to Fig. 2, the second wavelength division multiplexing/demultiplexing device 30 comprises a second arranged waveguide grating AWG2, input and output waveguides 310, 318 each of which is connected with respective ends of the second arranged waveguide grating AWG2, and a third and a fourth plastic coupler 314, 316 that are provided between the second arrayed waveguide grating AWG2 and the input waveguide 310 and between the second arrayed waveguide grating AWG2 and the output waveguide 318, respectively, to couple the second arrayed waveguide grating with the input and output waveguides. The second wavelength division multiplexing/demultiplexing device 30 further comprises a second array waveguide 350 in proximity to the second input waveguides 310. The second input waveguides 310 form a second waveguide array. The second output waveguides 318 forms a second output waveguide array. Alternatively, it is possible for the second input waveguide array 310 to consist of just one waveguide.

As shown in Fig. 3, the port 350P of the second array waveguide 350 is positioned at side P2. The second array waveguide 350 is a straight waveguide and installed in proximity to the second input waveguide array 310. The second input and output ports 310P, 318P of the second wavelength division multiplexing/demultiplexing device 30, and the port 350P of the second array waveguide are positioned at side P2. That is, they are positioned in a line on the same side.

In operation, the first and the second array waveguide 250, 350 in the first and the second wavelength division multiplexing/demultiplexing device 20, 30 perform the functions listed below. Note that as the first and the second array waveguide 250, 350 perform the same functions, only functions of the first array waveguide 250 will be described herein to avoid redundancy.

The first and second optical fiber array blocks 40, 50 are positioned at the respective sides of the planar lightguide circuit S. Where light is projected from an optical fiber block 410 toward the first array port 250P for the purpose of an initial arrangement, the straight waveguide 250 permits to detect signals outputted from the other side P2. Using this principle, an initial arrangement can easily be accomplished. If the initial arrangement is carried out, optical signals are detected at the number of N output waveguides 218. As such, a precise arrangement can be obtained using signals from the straight waveguide 250 and the outermost port of the output waveguides 218.

As shown in Fig. 3, the first optical fiber array block 40 comprises an optical fiber block 410 and a glass cover C3. The glass cover C3 serves to press and fix the bare optical fibers of ribbon optical fibers 412 positioned at V-grooves (not shown) on the optical fiber block 410. One side of the optical fiber block 410 is provided with several ports 420P, 421P, 422P corresponding to the input and output ports 210P, 218P of the first wavelength division multiplexing/demultiplexing device 20, and the port 250P of the first array waveguide respectively. The ribbon optical fibers 412 positioned at the first optical fiber array block 40 comprise input optical fibers 412a and output optical fibers 412b.

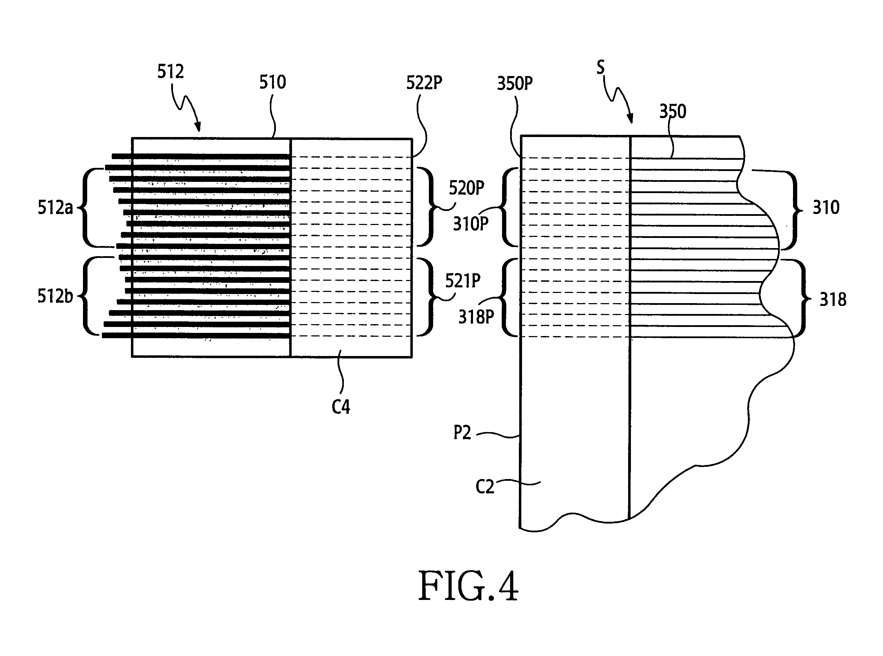

As shown in Fig.4, a second optical fiber array block 50 comprises an optical fiber block 510 and a glass cover C4. The glass cover C4 serves to press and fix the bare optical fibers of ribbon optical fibers 512 positioned at V-grooves (not shown) on the optical fiber block 510. The one side of the optical fiber block 510 is provided with several ports 520P, 521P, 522P corresponding to the input and output ports 310P, 318P of the second wavelength division multiplexing/demultiplexing device 30, and the port 350P of the second array waveguide respectively. The ribbon optical fibers 512 positioned at the second optical fiber array block 50 comprise input optical fibers 512a and output optical fibers 512b.

Although not shown in the figures, the planar lightguide circuit S is one optical communication module, which is fabricated by arranging and coupling the first and the second optical fiber array block 40, 50, then installing a heat source for thermal adjustment, a sensor for sensing a temperature, and a protective case for protecting the optical circuit from an external environment.

In summary, the dual wavelength division multiplexing/demultiplexing device assembled as described above according to the present invention can function in the same manner as having two optical circuits. This is accomplished by positioning two arrayed waveguide gratings to be symmetric on one planar lightguide circuit and coupling each of the first and second optical fiber array blocks with input and output ports. As a result, manufacturing cost can be curtailed drastically and the effect of having dual wavelength division multiplexing/demultiplexing functions can be carried out using one optical circuit.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An apparatus for multiplexing/demultiplexing optical signals comprising:
(a) a planar lightguide circuit having a first wavelength division multiplexing/demultiplexing device and a second wavelength division multiplexing/demultiplexing device, the first wavelength division multiplexing/demultiplexing device comprising input and output ports corresponding a plurality of first input and output waveguides at one side of the planar lightguide circuit and a first arrayed waveguide grating coupled to the first input and output waveguides, and the second wavelength division multiplexing/demultiplexing device comprising input and output ports corresponding a plurality of second input and output waveguides at the other side of the planar lightguide circuit and a second arrayed waveguide grating coupled to the second input and output waveguides;
(b) a first optical fiber array block having a plurality of ports corresponding to the input and output ports of the plurality of first input and output waveguides and connected to with a plurality of first ribbon optical fibers; and,
(c) a second optical fiber array block having a plurality of ports corresponding to the input and output ports of the plurality of second input and output waveguides and connected to a plurality of second ribbon optical fibers.

2. The apparatus as set forth in Claim 1, wherein the first wavelength division multiplexing/demultiplexing device further comprises a first array waveguide.

3. The apparatus as set forth in Claim 2, wherein the input port of the first array waveguide is positioned at the other side of the planar lightguide circuit and the output port thereof is positioned at the one side of the planar lightguide circuit.

4. The apparatus as set forth in Claim 2, wherein the first array waveguide is a straight waveguide.

5. The apparatus as set forth in Claim 2, wherein the first array waveguide is positioned in proximity to the input waveguides of the first wavelength division multiplexing/demultiplexing device.

6. The apparatus as set forth in Claim 1, wherein the second wavelength division multiplexing/demultiplexing device further comprises a second array waveguide.

7. The apparatus as set forth in Claim 6, wherein the input port of the second array waveguide is positioned at the one side of the planar lightguide circuit and the output port thereof is positioned at the other side of the planar lightguide circuit.

8. The apparatus as set forth in Claim 6, wherein the second array waveguide is a straight waveguide.

9. The apparatus as set forth in Claim 2, wherein the second array waveguide is positioned in proximity to the input waveguides of the second wavelength division multiplexing/demultiplexing device.

10. The apparatus as set forth in Claim 1, wherein the first and the second wavelength division multiplexing/demultiplexing devices are positioned to be symmetric with each other.

11. The apparatus as set forth in Claim 1, wherein the input and output waveguides of the first wavelength division multiplexing/demultiplexing device comprise a first input waveguide array and a first output waveguide array that is in a line positioned in proximity to the first input waveguide array.

12. The apparatus as set forth in Claim 1, wherein the input and output waveguides of the second wavelength division multiplexing/demultiplexing device comprise a second input waveguide array and a second output waveguide array that is in a line positioned in proximity to the second input waveguide array.

13. The apparatus as set forth in Claim 1, wherein the input and output waveguides of the first wavelength division multiplexing/demultiplexing device comprise a first input waveguide and a first output waveguide array that is in a line positioned in proximity to the first input waveguide.

14. The apparatus as set forth in Claim 1, wherein the input and output waveguides of the second wavelength division multiplexing/demultiplexing device comprise a second input waveguide and a second output waveguide array that is in a line positioned in proximity to the second input waveguide.

15. The apparatus as set forth in Claim 1, wherein the first and the second optical fiber array blocks are positioned opposite to each other.
